(19) **Europäisches Patentamt / European Patent Office / Office européen des brevets**

(11) **EP 3 175 196 B1**

(12) **FASCICULE DE BREVET EUROPEEN**

(45) Date de publication et mention de la délivrance du brevet:
**21.02.2024 Bulletin 2024/08**

(21) Numéro de dépôt: **15747785.2**

(22) Date de dépôt: **31.07.2015**

(51) Classification Internationale des Brevets (IPC):
**F24H 7/04** *(2006.01)* **F28D 20/00** *(2006.01)*
**F28F 1/30** *(2006.01)* **F28F 1/40** *(2006.01)*

(52) Classification Coopérative des Brevets (CPC):
**F24H 7/0433; F28D 20/021; F28F 1/30; F28F 1/40;**
F28D 7/16; F28D 2020/0078; Y02E 60/14

(86) Numéro de dépôt international:
**PCT/EP2015/067658**

(87) Numéro de publication internationale:
**WO 2016/016428 (04.02.2016 Gazette 2016/05)**

(54) **DISPOSITIF DE STOCKAGE D'ÉNERGIE PAR MATÉRIAU À CHANGEMENT DE PHASE ET UN PROCÉDÉ DE STOCKAGE ASSOCIÉ**

VORRICHTUNG ZUR SPEICHERUNG VON ENERGIE MITTELS EINES SPEICHERSTOFFES UND ZUGEHÖRIGES SPEICHERVERFAHREN

ENERGY STORAGE DEVICE WITH PHASE CHANGE MATERIAL AND METHOD FOR STORAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.07.2014 FR 1457433**

(43) Date de publication de la demande:
**07.06.2017 Bulletin 2017/23**

(73) Titulaire: **Commissariat à l'Énergie Atomique et aux Énergies Alternatives**
**75015 Paris (FR)**

(72) Inventeurs:
• **MARTINELLI, Matthieu**
**38100 Grenoble (FR)**
• **CHAZELLE, Benjamin**
**38400 Saint-Martin d'Hères (FR)**
• **COUTURIER, Raphaël**
**38360 Sassenage (FR)**

(74) Mandataire: **Hautier IP**
**20, rue de la Liberté**
**06000 Nice (FR)**

(56) Documents cités:
WO-A1-98/34073    AT-A1- 508 992
DE-A1-102009 057 904    DE-U1-202008 017 601
JP-A- 2007 032 866    US-A- 5 687 706

**EP 3 175 196 B1**

## Description

<u>DOMAINE TECHNIQUE</u>

La présente invention concerne un dispositif de stockage d'énergie par matériau à changement de phase et un procédé de stockage associé.

Le domaine de l'invention concerne les Systèmes de Stockage Thermiques (SST) par Matériaux à Changement de Phase (MCP) ; et plus particulièrement, l'intégration d'un système permettant d'optimiser la disponibilité d'énergie thermique stockée.

L'invention trouvera son application dans les réseaux électriques et de chaleur urbains ou ruraux. L'invention pourra également trouver des applications dans le développement des réseaux « smartgrid » électriques et thermiques, ainsi que dans les interactions entre ces réseaux.

<u>ETAT DE LA TECHNIQUE</u>

Les réseaux de chaleur sont constitués d'au moins une source de chaleur (centrale thermique, panneaux solaires thermiques, source géothermique,...), d'un réseau de fluide permettant le transport des calories aux usagers par l'intermédiaire d'un fluide caloporteur et éventuellement d'un réseau de retour. A chaque abonné correspond un échangeur de chaleur permettant le transfert thermique du circuit primaire (réseau relié à la source de chaleur) à un circuit secondaire ; ce second circuit est la propriété de l'abonné et est parcouru par de l'eau chaude (<100°C). Cet échangeur est le point de livraison de l'énergie thermique, on appelle l'ensemble échangeur, compteur, et les différents jeux de vannes : une sous-station.

La charge d'un réseau de chaleur est très fluctuante, en moyenne sur l'année les unités de production fonctionnent à 25% de leur capacité, les pics de consommation sont 4 fois plus importants que la charge moyenne. Ces pics (matin, soir) représentent environ 30% de la consommation thermique d'une journée de chauffe typique. Les générateurs d'appoints (et de secours) sont généralement des centrales thermiques au fioul lourd, au gaz naturel ou au charbon, polluantes et pas toujours bon marché. L'utilisation d'un système de stockage thermique qui emmagasinerait des calories pendant que la demande est basse et les réinjecterait sur le réseau pendant les pics de consommations pourrait pallier ce problème.

Le stockage thermique peut être réalisé par stockage par enthalpie de changement d'état. Dans ce cas le stockage se fait via le changement de phase d'un matériau. C'est l'enthalpie de changement de phase, le plus souvent lors du changement d'état solide/liquide, qui est stockée. Cette énergie, qui est absorbée lors de la fusion et libérée lors de la solidification, résulte de l'établissement, ou de la rupture, de liaisons interatomiques ou intermoléculaires. La charge du système de stockage s'accompagne de la fusion du matériau de stockage, tandis que la décharge est réalisée par la solidification dudit matériau. Le matériau doit être judicieusement choisi en fonction de la température cible du système de stockage, afin que sa température de fusion soit dans la plage de température d'utilisation.

La quantité d'énergie thermique stockée au cours du changement de phase s'exprime avec la relation suivante :

$$\Delta Q = m \cdot h$$

m Masse [kg]
h Enthalpie massique de changement de phase [kJ/kg]

Un des avantages majeurs de cette technologie est que le changement de phase se fait à pression et température constantes. Par conséquent, la décharge de l'énergie stockée peut se fait à température constante.

L'enthalpie de changement de phase est relativement importante en comparaison de la variation d'énergie sensible d'un matériau. Par exemple, l'énergie stockée dans la fusion d'un bloc de glace (passage de 0 à 1°C) est équivalente à l'énergie stockée dans cette même quantité d'eau si on la chauffe de 80°C.

Par conséquent, les systèmes de stockage avec MCP sont intéressants car la quantité d'énergie stockée par unité de volume est supérieure à celle obtenue par un système sensible (meilleure densité de stockage) tant que la plage des températures de fonctionnement reste modérée. De ce fait les volumes de stockage et de matériaux sont réduits, ce qui diminue le prix du réservoir, et limite les pertes thermiques qui sont proportionnelles à la surface extérieure du réservoir.

Le stockage thermique s'est récemment développé autour des centrales solaires thermodynamiques afin de pallier l'intermittence de la ressource solaire. Aujourd'hui, la thématique du stockage thermique concerne également l'habitat et les réseaux de chaleur.

On connait notamment les technologies de macro-encapsulation du MCP, d'échangeur tube et calandre et de stockage avec contact direct.

La macro-encapsulation du MCP consiste à placer dans un réservoir des modules étanches comprenant un MCP. Ces modules sont plongés dans un fluide caloporteur qui s'écoule le long des modules. Le fluide caloporteur et le MCP vont échanger de la chaleur. Le fluide caloporteur va en céder au MCP pendant la charge, ce qui entrainera la fusion de ce dernier. Le MCP va céder de la chaleur au fluide caloporteur pendant la décharge, ce qui entrainera la solidification de ce premier.

La technologie d'échangeur tubes et calandre est bien connue : une calandre dans laquelle circule un fluide est parcourue par un faisceau de tubes dans lesquels un autre fluide s'écoule. Les deux fluides échangent de l'énergie par conduction à travers l'épaisseur des tubes. Dans le cas du stockage thermique cette technologie est adaptée, il n'y a plus échange entre deux fluides en mouvement, mais entre un fluide caloporteur qui circule dans les tubes et le MCP qui est fixe dans la calandre (mis à part les mouvements de convection naturelle en phase liquide). Lors de la charge, le fluide caloporteur arrive à une température supérieure à la température de fusion du MCP et cède de l'énergie à celui-ci, ce qui entraine sa fusion ; lors de la décharge, le fluide caloporteur entre à une température inférieure à la température de fusion du MCP et récupère l'énergie précédemment stockée, ce qui entraine la solidification du MCP.

Le stockage thermique par changement de phase d'un matériau est dit « à contact direct » si le MCP est en contact direct avec le fluide caloporteur.

A titre d'exemple, pendant la charge, de l'huile chaude arrive par un tube d'alimentation et cède de l'énergie au MCP, entrainant la fonte de celui-ci. Ayant une densité plus faible que le MCP, l'huile remonte dans la partie haute du réservoir où elle est pompée pour retourner dans l'échangeur où elle est réchauffée. Au cours de la décharge, l'huile froide arrive par le tube d'alimentation, elle monte en température en échangeant de l'énergie avec le MCP qui se solidifie, puis remonte dans la partie haute du réservoir où elle est de nouveau pompée ; dans l'échangeur, l'huile cède de la chaleur à un fluide secondaire.

Toutefois, malgré le stockage d'énergie thermique il est encore parfois difficile d'assurer un approvisionnement d'énergie thermique satisfaisant en termes de qualité et de quantité lors des pics de demande.

Le document US 5 687 706 A décrit un dispositif de stockage d'énergie, dans lequel une source de chaleur électrique est utilisée pour transférer la chaleur au MCP disposé dans une enceinte. Un circuit de transfert de chaleur est utilisé pour transporter l'énergie stockée vers l'extérieur du dispositif.

Le document DE 20 2008 017601 U1 prévoit un dispositif de stockage d'énergie par MCP selon le préambule de la revendication 1.

Il existe donc le besoin de proposer un dispositif permettant une meilleure disponibilité de l'énergie thermique ainsi qu'une meilleure utilisation des dispositifs de stockage existant.

RÉSUMÉ DE L'INVENTION

La présente invention propose à cet effet un dispositif de stockage d'énergie par matériau à changement de phase comprenant une enceinte et un matériau à changement de phase destiné à être contenu dans ladite enceinte et une source de chaleur thermique comprenant un fluide caloporteur traversant ladite enceinte pour apporter et extraire de la chaleur audit MCP, et une source de chaleur électrique configurée pour uniquement apporter de la chaleur dans ledit MCP. La source de chaleur électrique permet de générer de la chaleur transmise au MCP qui stocke l'énergie thermique d'origine électrique. En parallèle, le stockage de l'énergie thermique se fait par le fluide caloporteur qui la transmet au MCP. Avantageusement, la récupération de l'énergie thermique issue indifféremment de l'énergie électrique ou de l'énergie thermique est réalisée par le fluide caloporteur sous forme de chaleur.

L'invention permet d'utiliser deux sources d'énergie pour stocker de l'énergie thermique. L'intégration d'une source de chaleur électrique à un système de stockage par matériau à changement de phase, en supplément de la source de chaleur thermique usuelle, optimise le fonctionnement du dispositif en assurant une meilleure disponibilité de chaleur notamment lors des pics de consommation. L'invention proposée permet également de valoriser sous forme thermique l'énergie électrique produite en excès par un champ éolien ou une ferme solaire photovoltaïque, par exemple. Elle est particulièrement adaptée aux réseaux locaux qui cherchent l'indépendance énergétique et où les interactions entre réseaux de chaleur et électrique sont au coeur du développement des énergies renouvelables (EnR).

L'invention contribue de manière avantageuse à fournir de l'énergie thermique même en cas de maintenance ou de panne de la source de chaleur thermique grâce à la source de chaleur électrique.

Préférentiellement, la source de chaleur thermique et la source de chaleur électrique sont distantes l'une de l'autre. Cette distance entre les deux sources de chaleur permet de limiter les interférences entre ces dernières autorisant un fonctionnement du dispositif optimal avec une charge électrique et une charge thermique en parallèle. Cette distance est définie et maintenue par exemple par des moyens d'éloignement.

Selon l'invention, le dispositif comprend un profilé avantageusement longitudinal en contact avec le matériau à changement de phase comprenant un logement recevant la source de chaleur électrique.

Préférentiellement, la source de chaleur électrique est une résistance thermique. Selon une possibilité, le logement comprend un agent de contact thermique dans lequel plonge la source de chaleur thermique. Cet agent permet la continuité thermique entre la source de chaleur électrique et le profilé.

Selon l'invention, le dispositif comprend un échangeur plongeant dans le MCP comprenant un tube et dans lequel circule le fluide caloporteur.

Avantageusement, le profilé longitudinal est en contact avec ledit échangeur.

Avantageusement, l'échangeur comprend un insert métallique entourant ledit tube d'échangeur configuré pour assurer une conduction thermique avec le MCP.

Le profilé longitudinal est avantageusement en contact avec ledit insert. Le dispositif selon l'invention permet avantageusement, notamment par cette disposition, d'effectuer un stockage d'énergie thermique et d'énergie électrique simultanément sans interférence néfaste, ledit insert jouant notamment le rôle de moyens d'éloignement.

Suivant un autre objet, la présente invention concerne un procédé de stockage d'énergie comprenant une phase de stockage d'énergie thermique, une phase de stockage d'énergie électrique et une phase de déstockage. Le procédé permet avantageusement un stockage de chaleur à partir d'énergie thermique et d'énergie électrique simultanément sans interférence néfaste ainsi qu'un stockage de chaleur à partir d'énergie électrique simultanément sans interférence avec un déstockage d'énergie thermique.

BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les figures d'accompagnement dans lesquelles :

Figure 1 : vue du dessus d'un exemple de réseau formé par des échangeurs comprenant des inserts et les tubes à ailettes et des profilés.

Figure 2 : tube à ailettes circulaires.

Figure 3 : vue du dessus d'un échangeur dont le tube à ailettes est placé dans un insert.

Figure 4 : vue du dessus d'un profilé.

Figure 5 : vue du dessus de détails des moyens de fixations entre les inserts et un profilé.

Figure 6 : profilé selon un premier mode de réalisation.

Figure 7 : profilé selon un deuxième mode de réalisation.

Figure 8 : vue du dessus d'un exemple de réseau formé par des échangeurs comprenant des inserts et les tubes à ailettes et des profilés.

Figure 9 : profilé selon le mode de réalisation illustré à la figure 8.

Figure 10 : Echangeur selon le mode de réalisation illustré à la figure 8 avec un insert octogonal avec tube à ailettes.

Les dessins joints sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement.

On rappelle tout d'abord que l'invention porte sur un dispositif de stockage d'énergie par matériau à changement de phase (MCP) tel que défini dans la revendication 1, comprenant une enceinte destinée à recevoir un matériau à changement de phase et une source de chaleur thermique comprenant un fluide caloporteur traversant ladite enceinte et configuré pour apporter et extraire de la chaleur audit MCP, le dispositif comprenant une source de chaleur électrique agencée dans l'enceinte configurée pour uniquement stocker de la chaleur dans ledit MCP.

Le dispositif comprend un profilé agencé en contact thermique avec le MCP et comprenant un logement dans lequel est disposée la source de chaleur électrique.

Avantageusement, le logement dudit profilé comprend un agent de contact thermique assurant la conductivité thermique entre la source de chaleur électrique et ledit profilé.

Avantageusement, la source de chaleur électrique est une résistance électrique.

Selon l' intention, la source de chaleur thermique comprend un échangeur plongeant dans le MCP et dans lequel circule le fluide caloporteur.

Avantageusement, l'échangeur comprend un tube comprenant des ailettes périphériques conformées pour assurer les transferts thermiques entre le MCP et le fluide caloporteur contenu dans ledit tube.

Avantageusement, l'échangeur comprend un insert métallique entourant ledit tube et configuré pour assurer une continuité thermique avec ledit tube.

Selon l'invention, le profilé est en contact avec l'échangeur recevant le fluide caloporteur.

Avantageusement, le profilé comprend des ramifications s'étendant depuis le logement en direction l'échangeur.

Avantageusement, le dispositif comprend une pluralité d'échangeurs et une pluralité de profilés agencés aux contacts d'au moins deux échangeurs.

Selon l'invention, le dispositif comprend des moyens de fixation entre au moins un échangeur et un profilé.

Avantageusement, l'échangeur et le profilé forme un ensemble monobloc plongeant dans le MCP destiné à être contenu dans l'enceinte.

Avantageusement, la source de chaleur thermique et la source de chaleur électrique sont agencées à distance l'une de l'autre pour assurer une indépendance thermique.

Avantageusement, la source de chaleur thermique et la source de chaleur électrique sont distantes d'au moins trois fois le diamètre du tube.

Avantageusement, le MCP est un MCP liquide/solide.

Suivant un autre aspect l'invention concerne, un procédé de stockage d'énergie thermique par au moins un matériau à changement de phase tel que défini dans la revendication 12, comprenant:

a- une phase de stockage d'énergie électrique dans laquelle la source de chaleur électrique transmet de la chaleur au MCP qui stocke l'énergie électrique sous forme d'énergie thermique,

b- une phase de stockage d'énergie thermique dans laquelle le fluide caloporteur de la source de chaleur thermique transmet ladite chaleur audit MCP qui stocke l'énergie thermique,

c- une phase de déstockage d'énergie thermique dans laquelle le fluide caloporteur refroidit le MCP qui libère l'énergie thermique qui est récupérée par le fluide caloporteur.

Avantageusement, les phases a- et b- sont effectuées simultanément ou alternativement.

Avantageusement, les phases a- et c- sont effectuées simultanément.

Le dispositif selon l'invention est un dispositif de stockage d'énergie par matériau à changement de phase (MCP). Le dispositif permet de stocker de l'énergie thermique aussi bien d'origine thermique que d'origine électrique.

L'invention permet d'avoir deux moyens de charge du système de stockage : une source électrique et une source thermique. La charge électrique s'entend comme la charge du dispositif de stockage d'énergie thermique à partir d'une source électrique et la charge thermique s'entend comme la charge du dispositif de stockage d'énergie thermique à partir d'une source thermique. La source thermique peut avoir plusieurs origines qui peuvent être le bois-énergie, la géothermie, la combustion d'ordures ménagères, de gaz naturel, etc., c'est également le cas pour la source électrique qui peut être d'origine photovoltaïque, éolienne, etc.

Le dispositif comprend une enceinte 13 de stockage destinée à contenir au moins un MCP 6 et un fluide caloporteur 4 traversant ladite enceinte 13.

L'enceinte 13 est classiquement d'une forme cylindrique dont les parois sont formées de matériau métallique résistant aux variations de pression et de température. A titre d'exemple, l'enceinte 13 est en acier de construction au carbone. Les nuances classiques pour une enceinte 13 sous pression sont P235GH, P265GH, P355GH. En l'absence de pression, des aciers inoxydables 304, 316 peuvent être utilisés.

Selon le type de dispositif de stockage d'énergie thermique, différentes configurations sont possibles.

Selon un premier mode de réalisation utilisant l'encapsulation du MCP 6, le dispositif comprend une enceinte 13 dans laquelle le MCP 6 est placé sous forme encapsulée dans des modules étanches plongés dans le fluide caloporteur 4 s'écoulant le long des modules et traversant l'enceinte 13 d'une entrée vers une sortie.

Selon un deuxième mode de réalisation utilisant le contact direct, le MCP 6 et le fluide caloporteur 4 directement contenus dans l'enceinte 13, le fluide caloporteur 4 traversant l'enceinte 13 d'une entrée vers une sortie.

Selon un troisième mode de réalisation préféré utilisant un échangeur type tube/calandre, le MCP 6 est placé directement dans l'enceinte 13 et un échangeur 5 plonge dans ledit MCP 6. L'échangeur 5 est un échangeur thermique 5 à fluide caloporteur 4. L'échangeur 5 comprend un tube 1 avantageusement des ailettes 2 et avantageusement un insert 3 qui seront décrits ci-après. L'échangeur 5 comprend une entrée et une sortie du fluide caloporteur 4 dans l'enceinte 13. L'entrée et la sortie sont agencées à l'extérieur de l'enceinte 13. L'entrée et la sortie peuvent être, selon les modes de réalisation, disposées à deux extrémités opposées de l'enceinte 13, par exemple l'entrée en haut et la sortie en bas ou bien agencées d'un même côté par exemple en haut. Préférentiellement, l'échangeur 5 est au moins partiellement positionné dans l'enceinte 13.

Le fluide caloporteur 4 est classiquement de l'eau mais tout autre fluide présentant des propriétés caloportrices peut être utilisé.

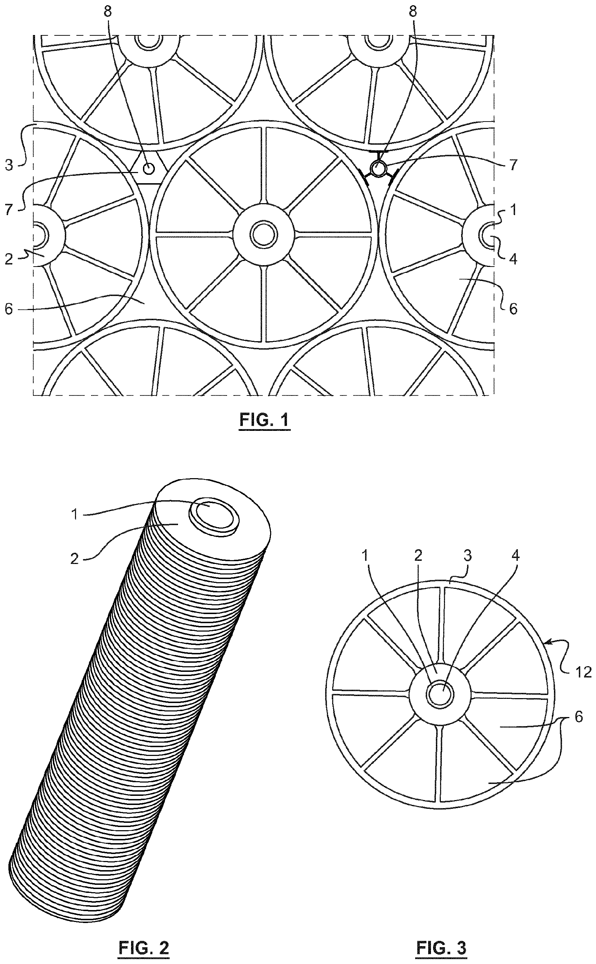

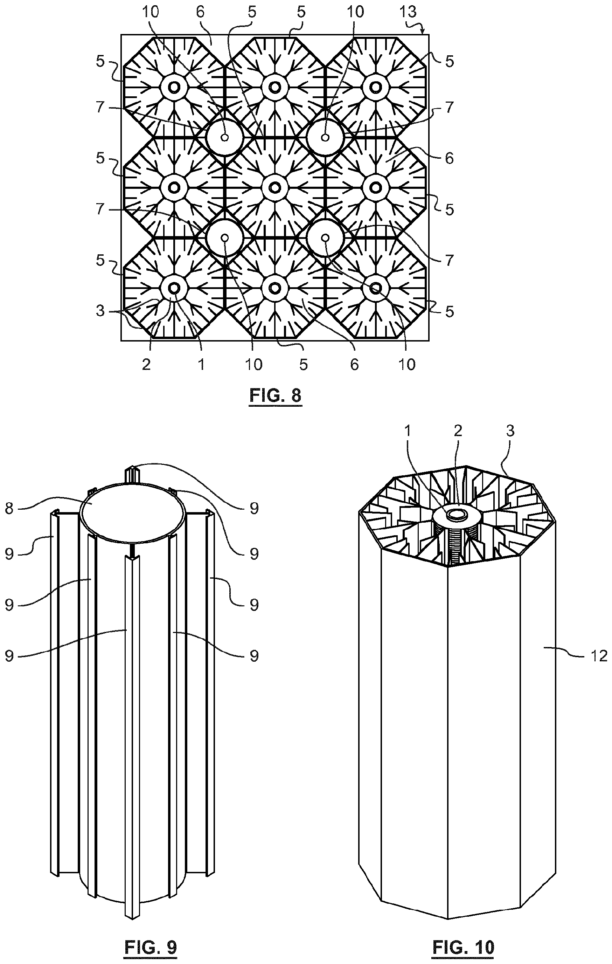

Préférentiellement, le dispositif comprend une pluralité d'échangeurs 5 agencés dans l'enceinte 13. Des exemples de disposition sont illustrés aux figures 1 et 8.

L'échangeur 5 peut être de différents types. A titre préféré, l'échangeur 5 comprend un tube 1 comprenant avantageusement des ailettes 2 tel qu'illustré en figures 2 et 3. Le tube 1 et les ailettes 2 sont en matériau conducteur thermiquement tel qu'en métal par exemple en acier pour le tube 1 et en aluminium pour les ailettes 2. Le tube 1 peut être de diverses sections, à titre d'exemple circulaire tel qu'illustré aux figures. Ce type d'échangeur 5 présente l'avantage d'assurer les transferts thermiques entre le MCP 6 et le fluide caloporteur 4. Les ailettes 2 peuvent être longitudinales disposées le long des tubes, par exemple. Les ailettes 2 peuvent aussi être orthogonales, elles sont alors disposées hélicoïdalement autour du tube 1, et peuvent être circulaires pleines, ou segmentées.

Selon d'autres possibilités, l'échangeur 5 peut être sous la forme d'un serpentin qui présente l'avantage d'être moins onéreux ou bien avec des plaques. Avantageusement, l'échangeur 5 comprend un insert 3 agencé autour du tube 1 et éventuellement des ailettes 2 si celui-ci en est pourvu. L'insert 3 est un élément métallique permettant également d'améliorer les transferts thermiques entre le MCP 6 et le fluide caloporteur 4. L'insert 3 peut s'apparenter à une matrice métallique reliant plusieurs tubes 1 entre-eux. Avantageusement, l'insert 3, et les inserts 3 si le dispositif comprend avantageusement plusieurs échangeurs 5 dans l'enceinte 13, permettent de maintenir le réseau de tube 1. De plus, ils améliorent la conduction thermique au sein du MCP 6 en jouant le rôle d'ailettes 2 de grandes tailles.

Les inserts peuvent prendre plusieurs formes mais principalement ce sont des profilés métalliques possédant des surfaces de contact importantes avec le tube 1 ou ses ailettes 2 et des surfaces de contact importantes avec le MCP 6. L'insert 3 est par exemple de section circulaire, figures 1 et 3, ou octogonal, figure 8 et 10. L'insert 3 comprend selon une possibilité des parois externes 12 pleines améliorant la conductivité thermique. Préférentiellement, les inserts 3 sont en contact les uns avec les autres tels qu'illustrés aux figures 1 et 8.

A titre indicatif et illustratif, les inserts 3 ont un diamètre extérieur de 212mm ; les ailettes 2 ont un diamètre extérieur de 57,4mm ; les tubes 1 ont un diamètre extérieur de 25,4mm et une épaisseur de 2,7mm.

Le dispositif de stockage peut comprendre selon une possibilité un dispositif de régulation de la température du fluide caloporteur 4. Le dispositif de régulation permet de contrôler la température du fluide caloporteur 4 lors de l'utilisation du dispositif de stockage d'énergie pour apporter et extraire de la chaleur du MCP 6 contenu dans l'enceinte 13.

Selon un mode de réalisation préféré, l'enceinte 13 comprend des parois intérieures classiquement métalliques. Les parois sont préférentiellement recouvertes d'un matériau de revêtement destiné à éviter le contact entre le au moins un MCP 6 et des parties métalliques. A titre d'exemple le matériau de revêtement est un polymère ou une résine, préférentiellement un matériau de type résine fluorée tel du PTFE, FEP ou PFA. Cette disposition améliore les capacités de stockage du MCP 6 en limitant l'oxydation du MCP 6 lors des cycles de stockage au contact de l'oxygène et/ou du métal. Avantageusement, cette disposition peut également être utile pour éviter la corrosion de l'enceinte 13 par le MCP 6 si celui-ci est corrosif.

L'enceinte 13 contient au moins un MCP 6. Il peut être utilisé des mélanges de MCP 6. Dans la suite de la description, la référence à un MCP 6 n'est pas limitative. Différents MCP 6 peuvent être utilisé notamment les MCP 6 à transition solide/solide ou préférentiellement les MCP 6 à transition solide/liquide. L'invention est adaptée à une vaste variété de MCP 6 et donc à une large gamme de température de stockage. Les deux grandes catégories de MCP 6 pouvant être utilisés sont les organiques (paraffine, acide gras, alcool,...) et les inorganiques (hydrates de sel, alliages métalliques,...). A titre d'exemple non limitatif, le MCP 6 est l'érythritol.

L'enceinte 13 contient le MCP 6 qui entoure l'échangeur 5. L'échangeur 5 est noyé dans le MCP 6 assurant ainsi le contact entre le MCP et l'échangeur. De cette manière, l'échangeur 5 récupère au mieux les variations de chaleur du MCP 6.

Le MCP 6 est un matériau à deux phases préférentiellement solide ou liquide dont le passage entre ces deux phases stocke ou libère de l'énergie. Préférentiellement, le passage d'une première phase à une deuxième phase va nécessiter de la chaleur qui est donc stockée dans le MCP 6 dans sa deuxième phase. A contrario, le passage de la deuxième phase à la première phase est exothermique et libère la chaleur stockée.

Lorsque le dispositif de stockage d'énergie fonctionne pour stocker de l'énergie thermique, l'échangeur 5 apporte de la chaleur dans l'enceinte 13, il y a un échange de chaleur du fluide caloporteur 4 vers le MCP 6 au travers de l'échangeur 5. Cette chaleur va permettre la transformation du MCP 6 de la première phase à la deuxième phase qui stockera alors la chaleur issue du fluide caloporteur 4. Lorsque le dispositif fonctionne pour restituer de l'énergie thermique, l'échangeur 5 refroidit le MCP 6, il y a un échange de chaleur du MCP 6 vers le fluide caloporteur 4 au travers de l'échangeur 5, ce qui permet le passage de la deuxième phase à la première phase. Cette transformation est exothermique. La chaleur libérée est récupéré par le fluide caloporteur 4.

Le dispositif selon l'invention comprend de manière caractéristique des moyens de stockage de l'énergie électrique en énergie thermique par MCP 6.

Le dispositif comprend selon l'invention une source de chaleur électrique. Cette source de chaleur électrique est placée dans l'enceinte 13, avantageusement plongeant dans le MCP 6. Préférentiellement, lesdits moyens de stockage comprennent un profilé 7 préférentiellement longitudinal en contact avec le MCP 6 et comprenant un logement 8 dans lequel vient se loger la source de chaleur électrique.

Le profilé 7 comprend un logement 8 s'étendant avantageusement longitudinalement d'une extrémité à l'autre dudit profilé 7. Le logement 8 est préférentiellement centré dans ledit profilé 7. Le logement 8 peut être de diverses sections, à titre d'exemple circulaire tel qu'illustré aux figures.

On entend par contact un contact thermique, c'est-à-dire soit un contact direct soit un contact indirect par au moins un élément conducteur.

Il est préféré que la source de chaleur électrique et le logement 8 soit de forme complémentaire ajustée tel un doigt dans un gant, pour assurer une continuité thermique satisfaisante. A défaut, il est possible que le logement 8 du profilé 7 contienne un agent de contact thermique dans lequel plonge la résistance électrique 10. L'agent de contact thermique est préférentiellement un fluide. A titre d'exemple, l'agent de contact thermique est une huile thermique du type polychlorobiphényle ou polyol, une poudre métallique, un métal fondu, un MCP identique ou différent de celui contenu dans l'enceinte 13. L'agent de contact thermique a pour but d'assurer le transfert thermique entre la résistance électrique 10 et le profilé 7. La source de chaleur électrique est un moyen de transformation de l'énergie électrique en énergie thermique. Préférentiellement, le moyen de transformation de l'énergie électrique en énergie thermique est une résistance électrique. La résistance électrique 10 est également dénommée thermoplongeur. Il est envisageable d'utiliser un moyen de transformation de l'énergie électrique en énergie thermique autre non basé sur l'effet joule telle la résistance électrique, par exemple basé sur l'effet Peltier ou encore par induction. Toutefois les performances attendues sont moindres et le dispositif est plus coûteux et plus encombrant. Dans la suite de la description, le terme résistance électrique 10 est utilisé sans pour autant être limitatif à ce mode de réalisation préféré.

Le profilé 7 est préférentiellement un profilé métallique par exemple en aluminium. Les profilés aluminium présentent l'avantage d'être concevables de manière industrielle, à relativement bas coût, par extrusion.

De plus, l'aluminium est un excellent conducteur thermique (200W/m/K).

Le profilé 7 est selon l'invention en contact avec le MCP 6. On entend par contact que le profilé est en continuité thermique avec le MCP 6.

Dans le cas de l'encapsulation du MCP 6 dans des modules étanches, le profilé 7 sera en contact avec le MCP 6 contenu dans les modules étanches. Préférentiellement, le profilé 7 est disposé le plus au centre du module étanche de sorte à être éloigné des zones de contact thermique entre le MCP 6 et le fluide caloporteur 4. Cette disposition permet une charge électrique au centre du module étanche contenant le MCP 6 et une charge thermique par les parois du module. Ces zones de contacts étant disposées au niveau des parois des modules étanches.

Dans le cas d'un contact direct entre le MCP 6 et le fluide caloporteur 4, le profilé 7 est plongé dans l'enceinte 13 directement dans le MCP 6 et le fluide caloporteur 4, le contact thermique étant immédiat. De préférence, le fluide caloporteur 4 est introduit en partie basse de l'enceinte 13, il remonte du fait de sa plus faible densité par rapport au MCP 6. La charge thermique du MCP 6 se fait ici par le bas de l'enceinte 13. Avantageusement, le profilé 7 est agencé dans la partie haute de l'enceinte 13 de sorte à maintenir à distance la charge thermique et la charge électrique. Préférentiellement, le profilé 7 contient une partie verticale qui va permettre la création d'une voie liquide à travers le MCP 6 solide et qui va faciliter la remontée du fluide caloporteur 4 et du MCP 6 liquide.

Le profilé 7 est agencé en contact thermique avec le MCP 6 et en contact avec l'échangeur 5 recevant le fluide caloporteur 4. Dans le cas préféré de l'invention illustré sur les figures, le profilé 7 est plongé dans le MCP 6.

Préférentiellement, le profilé 7 est configuré pour permettre la continuité thermique entre les échangeurs 5 plus précisément les inserts 3. Préférentiellement, le profilé 7 est en contact avec ceux-ci afin d'optimiser les transferts thermiques d'une part et d'autre part pour maintenir lesdits échangeurs 5. Le profilé 7, avec préférentiellement également les inserts 3, doit agir comme structure de support des tubes 1 à ailettes 2. Il est possible d'avoir un profilé 7 qui ne serait pas en contact avec les inserts 3 à condition qu'une structure générale maintienne les échangeurs 5, ou si le profilé 7 est fixé en haut et en bas de l'enceinte 13. Pour maintenir des transferts thermiques relativement satisfaisant, des moyens de fixation maintiennent avantageusement le réseau tubes 1 /inserts 3 /profilés 7 ou bien le profilé 7 est soudé à l'enceinte 13, avantageusement en partie inférieure et/ou supérieure de l'enceinte 13, préférentiellement, il n'y a pas de fixation sur les faces latérales de l'enceinte 13.

Selon un mode de réalisation préféré, les extrémités des profilés 7, plus précisément des logements 8, sont fermées par exemple avec un bouchon soudé en bas et via la bride de la résistance électrique 10 qui est vissée en partie haute du profilé 7. Le bouchon en bas et la bride en haut ont pour but d'empêcher que du MCP 6 vienne se placer entre la résistance électrique 10 et le profilé 7, ce qui pourrait endommager le MCP 6 lors de la chauffe de la résistance électrique 10 ou endommager la résistance électrique 10 lors du changement d'état du MCP 6 du fait notamment de l'expansion volumique. Le soudage d'un bouchon en bas est la solution à privilégier car l'étanchéité est quasiment garantie ; pour la bride en haut, elle permet à l'invention d'être modulable : il est possible de retirer ou remettre des résistances électriques, voire les remplacer en cas de défaillance.

Les profilés 7 utilisés autour des résistances électriques 10 permettent d'améliorer la conductivité thermique effective du système de stockage et ce, même si les résistances électriques ne fonctionnent pas ; ils jouent en effet le rôle d'ailettes. Par ailleurs, les profilés 7 protègent la résistance électrique 10 d'une possible corrosion due au contact avec le MCP 6 et facilite la maintenance desdites résistances électriques.

Le profilé 7 selon l'invention s'adapte aux échangeurs 5 et notamment aux inserts 3 et tubes 1 existant.

Deux exemples de mode de réalisation sont décrits ci-après.

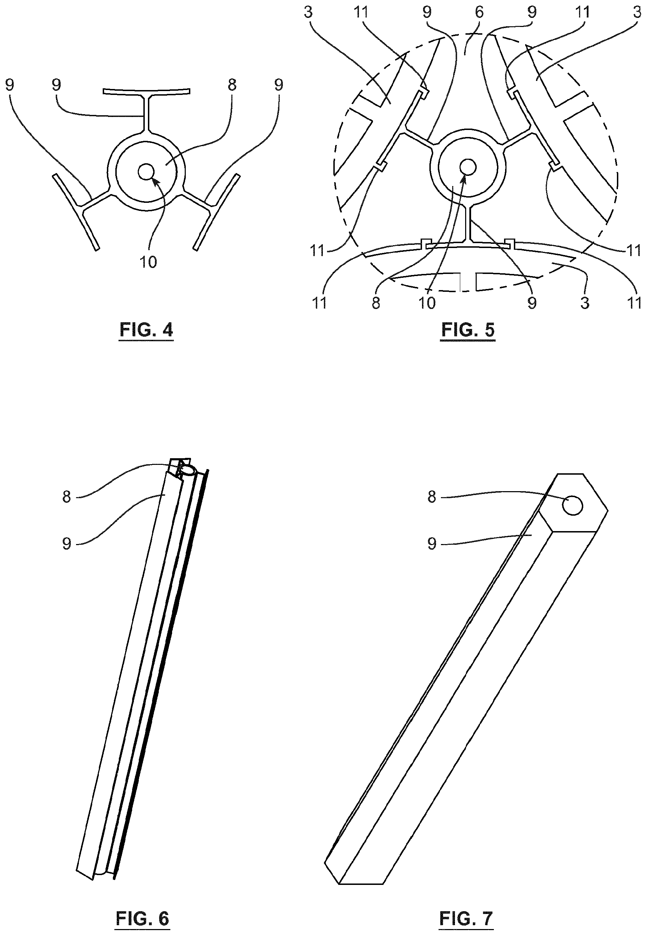

Le profilé 7 illustré à la figure 6 est un profilé comprenant un logement 8 central au sein duquel est placée la résistance électrique 10. Dans ce cas-là, il peut être avantageux d'ajouter un agent de contact thermique dans le logement 8 pour assurer une conduction thermique satisfaisante entre la résistance électrique 10 et le profilé 7. Des ramifications 9 s'étendent depuis le logement 8. Ces ramifications 9 peuvent prendre plusieurs formes, celle illustrée correspond à trois ramifications 9 s'étendant depuis le logement 8 de manière centrifuge. Les ramifications 9 sont conformées pour créer des surface de contact avec le MCP 6 et les échangeurs (5). Ces ramifications 9 ont par exemple une forme en T. La partie plane externe du T est avantageusement destinée à être en contact avec l'échangeur 5, plus précisément avec l'insert 3. Le profilé 7 est agencé dans les interstices entre les échangeurs 5. Le profilé 7 est avantageusement en contact avec plusieurs inserts 3. Ce profilé 7 présente l'avantage d'être léger et peu encombrant pour le dispositif laissant de la place pour le MCP 6.

Le profilé 7 illustré à la figure 7 est un profilé plein comprenant un logement 8 central au sein duquel est agencée la résistance électrique 10. Le profilé 7 présente une section triangulaire dont les sommets sont aplatis de sorte à former des surfaces de contact avec les échangeurs 5 plus spécifiquement avec les inserts 3. Ce profilé 7 est plus résistant, il est à privilégier si l'enceinte 13 est de grande taille et qu'une grande solidité est requise.

Selon l'invention, le dispositif comprend des moyens de fixation 11 entre le profilé 7 et l'échangeur 5, plus précisément l'insert 3. Un exemple de moyens de fixation 11 est illustré en figure 5. Des encoches sont formées à la surface externe des inserts 3 dans lesquelles la partie plane du T du profilé 7 vient se positionner par exemple par glissement.

Préférentiellement, les échangeurs 5 et au moins un profilé 7 sont monobloc. Il y a une solidarité mécanique entre les échangeurs 5 et ledit au moins un profilé 7 assurant leur maintien dans l'enceinte 13 avantageusement sans autre fixation.

A titre d'exemple, aux vues des longueurs et puissances qui pourraient être envisagées pour ce type de dispositif, les diamètres nominaux des thermoplongeurs 5 seraient de l'ordre de 5 à 10 cm. Il faut concevoir les profilés 7 et les inserts 3 en conséquence tels qu'illustrés aux figures 8 à 10.

Il existe une infinité de géométries afin d'adapter le réseau d'inserts 3 et de profilés 7 en fonction des tubes 1, des ailettes 2 et des résistances électriques. Il faut retenir que les formes des inserts 3 et des profilés 7 doivent être réalisées de telle sorte que la fixation de l'ensemble forme une structure permettant de supporter le réseau de tubes 1; il faut également que les géométries optimisent les transferts d'énergie entre la résistance électrique 10 et le MCP 6, par le profilé; de même il est tout à fait préférable d'augmenter la surface d'échange entre les profilés 7 et les inserts 3.

Selon une caractéristique avantageuse de l'invention la résistance électrique 10 est placée dans un profilé 7, lui-même plongé dans le MCP 6 et délocalisé par rapport à la charge thermique. La source de chaleur électrique est délocalisée de la source de chaleur thermique. La source de chaleur thermique est distante de la source de chaleur électrique. On entend par délocalisée que la résistance électrique 10 et la charge thermique réalisée par le fluide caloporteur 4 sont éloignées de sorte à ne pas interférer. La distance est telle qu'il y a une indépendance thermique entre les deux fluides caloporteurs 4 et 10. En effet, si les résistances électriques étaient situées le long des tubes 1 à ailettes 2, résistance enroulée autour du tube par exemple, alors la charge électrique nuirait considérablement à la charge thermique : la charge électrique ferait monter en température les tubes 1, qui assurent la dissipation de l'énergie thermique du fluide caloporteur 4 (charge thermique) dans le MCP 6 ; et étant donné que la chaleur échangée entre le fluide caloporteur 4 et le tube 1 dépend du gradient de température entre les deux, alors la montée en température du tube 1 va diminuer le gradient, voire l'inverser, et serait donc un obstacle à la charge thermique.

A titre d'exemple, la distance séparant le centre du tube 1 du logement 8 contenant respectivement le fluide caloporteur 4 et la source de chaleur électrique est d'au moins trois le diamètre du tube 1.

L'invention permet un arbitrage économique et écologique en fonction de la disponibilité des calories du réseau de chaleur et de l'électricité du réseau électrique. Par ailleurs, dans le cas d'une surproduction d'électricité liée à un fonctionnement intense d'un champ éolien par exemple, le surplus est valorisable sous forme thermique dans le système de stockage. Il est ainsi envisageable d'augmenter la taille des fermes éoliennes, afin d'augmenter la production de base, tout en valorisant la production électrique sous forme thermique lors des pics de production. Par ailleurs, le gestionnaire de réseau peut aussi faire le choix de privilégier la charge électrique dans le cas où celle-ci serait moins coûteuse que la charge thermique.

L'invention concerne également un procédé de stockage d'énergie tel que défini dans la revendication 12.

Le procédé de stockage comprend plusieurs phases.

Une phase a) de stockage d'énergie électrique, également appelée charge électrique. Au cours de cette phase, la résistance électrique 10 fonctionne et l'électricité est transformée en chaleur récupérée par l'agent de contact thermique s'il est présent et puis part le profilé 7. La chaleur est ensuite transmise au MCP 6 dans lequel est plongé le profilé 7. L'énergie électrique est stockée sous forme d'énergie thermique.

Une phase b) de stockage d'énergie thermique, également appelée charge thermique. Au cours de cette phase, le fluide caloporteur 4 contenu dans le tube 1 apporte de la chaleur qui est transmise au MCP 6 dans lequel est plongé le tube 1. L'énergie thermique est stockée sous forme d'énergie thermique.

Une phase c) de déstockage de l'énergie, également appelée décharge thermique. Le fluide caloporteur 4 récupère la chaleur stockée dans le MCP 6. Le fluide caloporteur 4 est plus froid que le MCP 6 qui transmet alors l'énergie thermique au fluide caloporteur 4.

Avantageusement, les phases a) et b) peuvent être simultanées. C'est-à-dire que la charge électrique et la charge thermique peuvent être réalisées en même temps dans le dispositif selon l'invention.

La simultanéité de ces deux phases permet notamment de limiter les contraintes mécaniques du MCP 6 sur l'échangeur 5. L'invention permet la création de voies liquides limitant les contraintes mécaniques sur les ailettes 2 qui seraient induites par l'expansion volumique du MCP 6 lors de sa fusion. Au cours de la phase a) la résistance électrique 10 est en fonctionnement. Le MCP 6 va fondre à proximité de la paroi du profilé 7 créant une voie liquide du bas de celui-ci jusqu'en haut de l'enceinte 13. Lorsque le MCP 6 fond, il se dilate et, en l'absence de voie liquide, il monte en pression ce qui peut conduire à l'endommagement de différents éléments du dispositif.

Avantageusement, l'invention permet de réaliser une charge électrique pendant que le dispositif est également en train d'être déchargé thermiquement. Les étapes a) et c) peuvent être simultanées. Autrement dit, alors que de le fluide caloporteur 4 froid circule dans les tubes 1 afin de récupérer l'énergie thermique stockée dans le MCP 6, décharge thermique, il est possible de réaliser, en parallèle, une charge électrique au niveau des résistances électriques. Le dispositif de stockage joue alors le rôle d'échangeur de chaleur. Ce mode de fonctionnement peut permettre de valoriser une énergie électrique disponible. Il peut aussi permettre d'assurer une livraison de chaleur dans une sous-station, même si le réseau de chaleur est indisponible du fait d'une maintenance ou d'un accident. Ce type de fonctionnement est également assimilable à l'ajout d'une « centrale électrique » sur le réseau de chaleur : en effet, dans le cas où toutes les centrales thermiques sont au maximum de leur puissance mais ne parviennent pas à assurer la demande, la mise en fonctionnement des différents moyens de charge électrique permet d'ajouter une source de chaleur sur le réseau.

*Exemple : Mise en place d'un dispositif de stockage selon l'invention sur un réseau de chaleur urbain.*

Un dispositif de stockage selon l'invention comprend un MCP 6, des tubes 1 à ailettes 2 et une enceinte 13, des thermoplongeurs placés dans des profilés 7 et reliés au réseau électrique.

Pour un système de stockage par enthalpie à changement de phase de type tubes à ailettes et calandre, il faut compter que le volume intérieur est occupé à environ un quart ou un tiers par les tubes à ailettes. Les tubes 1 sont en acier de diamètres intérieur et extérieur de 20mm et 25.4mm respectivement. Les ailettes 2 en aluminium de pas 2.54mm, d'épaisseur moyenne 0.4mm et de diamètre extérieur 57.4mm, et les inserts 3 en aluminium. En prenant en compte l'isolation de l'enceinte 13 et le revêtement extérieur, alors le MCP 6 ne représente qu'un peu plus de la moitié de l'espace total occupé par le dispositif de stockage.

Si l'on considère une ville de 150 000 habitants, le réseau de chaleur, circuit primaire, est parcouru par de l'eau chaude surchauffée jusqu'à 180°C, 20bar.

Soit une sous-station moyenne :

• 75 logements desservis
• 750MWhth fournis sur l'année
• Saison de chauffe de 150 jours (en basse saison, seules les sous-stations assurant le chauffage de l'eau chaude sanitaire sont en service ; globalement le réseau fonctionne à moins de 10% de sa capacité totale)
• Sous-stations alimentées en eau surchauffée jusqu'à 180°C, 20bar

MW signifie Mégawatt ; MWh signifie Mégawatt heure ; MWh $_{thermique}$ signifie Mégawatt heure de source thermique ou d'énergie thermique déchargée ; MWh $_{électrique}$ signifie Mégawatt heure d'origine électrique.

Considérons donc une consommation approximative de 5MWh$_{thermique}$/jr, dont 1.5MWh$_{thermique}$ sont consommés pendant les pics de consommation : c'est l'énergie à stocker dans le MCP 6. La charge doit se faire sur environ 3h, soit une puissance désirée de 0.5MW$_{thermique}$.

Le MCP 6 sélectionné est l'érythritol :

- Température de fusion : 120°C
- Enthalpie massique de fusion: 340 kJ/kg
- Capacité thermique massique à pression constante
- Densité solide : 1480 kg/m3
- Densité liquide : 1300 kg/m3

Les dimensions totales d'un tel stockage sont de 2.3m de diamètre et de 3.0m de haut pour l'enceinte soit 2.9m et 3.3m isolation comprise. Il y a environ 100 tubes 1 et au moins autant d'emplacements pour placer des thermoplongeurs dans des profilés 7 en aluminium. Il n'est pas forcément nécessaire d'en placer autant ; aux vues de ce qui se fait sur le marché des thermoplongeurs, une trentaine semble suffisante. En effet, sachant que la puissance thermique souhaitée est de 0.5MW$_{thermique}$ et que la charge électrique est là en complément, nous pouvons envisager ici une puissance électrique maximale d'environ 0.25MW$_{électrique}$, soit à peu près 30 thermoplongeurs de 8kW$_{électrique}$. Les thermoplongeurs proposés par Chromalox vont jusqu'à 3m de haut et 8kW$_{électrique}$, ceux de Vulcanic vont jusqu'à 3.2m et 75kW$_{électrique}$. Les thermoplongeurs sont insérés par le haut de l'enceinte, ils sont soit vissés dans le profilé 7, soit raccordés au profilé 7 via une bride.

## REFERENCES

1.   Tube
2.   Ailettes
3.   insert
4.   Fluide caloporteur
5.   Echangeur
6.   MCP
7.   Profilé
8.   Logement
9.   Ramification
10.   Résistance électrique
11.   Moyens de fixation
12.   Parois externes de l'insert
13.   Enceinte

**Revendications**

1.   Dispositif de stockage d'énergie par matériau à changement de phase (MCP) comprenant une enceinte (13) destinée à recevoir un matériau à changement de phase (6) et une source de chaleur thermique comprenant un fluide caloporteur (4) traversant ladite enceinte (13) et destiné à apporter et extraire de la chaleur audit MCP (6), le dispositif comprenant une source de chaleur électrique agencée dans l'enceinte (13), ledit fluide caloporteur (4) traversant ladite enceinte (13) étant destiné à la récupération de l'énergie thermique étant issue indifféremment de l'énergie électrique ou de l'énergie thermique **caractérisé en ce que**

- La source de chaleur électrique est configurée pour uniquement stocker de la chaleur dans ledit MCP (6),
- la source de chaleur thermique comprend un échangeur (5) plongeant dans le MCP (6) et dans lequel circule le fluide caloporteur (4),
- le dispositif comprend un profilé (7) agencé en contact thermique avec le MCP (6) et en contact avec l'échangeur (5) recevant le fluide caloporteur (4), le profilé comprenant un logement (8) dans lequel est disposée la source de chaleur électrique,
- le dispositif comprend des moyens de fixation entre au moins un échangeur (5) et un profilé (7).

2. Dispositif selon la revendication précédente dans lequel le logement (8) dudit profilé (7) comprend un agent de contact thermique assurant la conductivité thermique entre la source de chaleur électrique et ledit profilé (7).

3. Dispositif selon l'une quelconque des deux revendications précédentes dans lequel la source de chaleur électrique est une résistance électrique (10).

4. Dispositif selon l'une quelconque des revendications précédentes dans lequel l'échangeur (5) comprend un tube (1) comprenant des ailettes (2) périphériques conformées pour assurer les transferts thermiques entre le MCP (6) et le fluide caloporteur (4) contenu dans ledit tube (1).

5. Dispositif selon la revendication précédente dans lequel l'échangeur (5) comprend un insert (3) métallique entourant ledit tube (1) et configuré pour assurer une continuité thermique avec ledit tube (1).

6. Dispositif selon l'une quelconque des revendications précédentes dans lequel le profilé (7) comprend des ramifications (9) s'étendant depuis le logement (8) en direction de l'échangeur (5).

7. Dispositif selon l'une quelconque des revendications précédentes comprenant une pluralité d'échangeurs (5) et une pluralité de profilés (7) agencés aux contacts d'au moins deux échangeurs (5).

8. Dispositif selon l'une quelconque des revendications précédentes dans lequel l'échangeur (5) et le profilé (7) forme un ensemble monobloc plongeant dans le MCP (6) destiné à être contenu dans l'enceinte (13).

9. Dispositif selon l'une quelconque des revendications précédentes dans lequel la source de chaleur thermique et la source de chaleur électrique sont agencées à distance l'une de l'autre pour assurer une indépendance thermique.

10. Dispositif selon la revendication précédente en combinaison avec l'une quelconque des revendications 4 ou 5 dans lequel la source de chaleur thermique et la source de chaleur électrique sont distantes d'au moins trois fois le diamètre du tube (1).

11. Dispositif selon l'une quelconque des revendications précédentes dans lequel le MCP (6) est un MCP liquide/solide.

12. Procédé de stockage d'énergie par un dispositif de stockage d'énergie thermique selon l'une quelconque des revendications précédentes, le procédé comprenant :

a- une phase de stockage d'énergie électrique dans laquelle la source de chaleur électrique transmet de la chaleur au MCP (6) qui stocke l'énergie électrique sous forme d'énergie thermique,
b- une phase de stockage d'énergie thermique dans laquelle le fluide caloporteur (4) de la source de chaleur thermique transmet ladite chaleur audit MCP (6) qui stocke l'énergie thermique,

c- une phase de déstockage d'énergie thermique indifféremment issues de l'énergie électrique ou de l'énergie thermique réalisée par le fluide caloporteur (4) sous forme de chaleur dans laquelle le fluide caloporteur (4) refroidit le MCP (6) qui libère l'énergie thermique qui est récupérée par le fluide caloporteur (4).

13. Procédé selon la revendication précédente dans lequel les phases a- et b-sont effectuées simultanément ou alternativement.

14. Procédé selon la revendication 12 dans lequel les phases a- et c- sont effectuées simultanément.

**Patentansprüche**

1. Vorrichtung zur Speicherung von Energie durch Phasenwechselstoff (MCP), die einen Einschluss (13) umfasst, der dazu bestimmt ist, einen Phasenwechselstoff (6) und eine thermische Wärmequelle aufzunehmen, die ein Wärmeübertragungsfluid (4) umfasst, das den Einschluss (13) durchquert und dazu bestimmt ist, dem MCP (6) Wärme zuzuführen oder daraus abzuleiten, wobei die Vorrichtung eine elektrische Wärmequelle umfasst, die in dem Einschluss (13) eingerichtet ist, wobei das Wärmeübertragungsfluid (4), das den Einschluss (13) durchquert, dazu bestimmt ist, die thermische Energie zurückzugewinnen, die unterschiedslos von der elektrischen Energie oder von der Wärmeenergie stammt, **dadurch gekennzeichnet, dass**

- die elektrische Wärmequelle dazu konfiguriert ist, nur Wärme in dem MCP (6) zu speichern,
- die thermische Wärmequelle einen Wärmetauscher (5) umfasst, der in den MCP (6) taucht, und in dem das Wärmeübertragungsfluid (4) zirkuliert,
- die Vorrichtung ein Profil (7) umfasst, das in thermischem Kontakt mit dem MCP (6) eingerichtet und in Kontakt mit dem Wärmetauscher (5), der das Wärmeübertragungsfluid (4) empfängt, eingerichtet ist, wobei das Profil eine Aufnahme (8) umfasst,
- in der die elektrische Wärmequelle angeordnet ist, wobei die Vorrichtung Befestigungsmittel zwischen mindestens einem Wärmetauscher (5) und einem Profil (7) umfasst.

2. Vorrichtung nach dem vorstehenden Anspruch, wobei die Aufnahme (8) des Profils (7) ein thermisches Kontaktmittel umfasst, das die Wärmeleitfähigkeit zwischen der elektrischen Quelle und dem Profil (7) sicherstellt.

3. Vorrichtung nach einem der zwei vorstehenden Ansprüche, wobei die elektrische Wärmequelle ein elektrischer Widerstand (10) ist.

4. Vorrichtung nach einem der vorstehenden Ansprüche, wobei der Wärmetauscher (5) ein Rohr (1) umfasst, das umfängliche Rippen (2) umfasst, die gestaltet sind, um den Wärmetransfer zwischen dem MCP (6) und dem Wärmeübertragungsfluid (4), das in dem Rohr (1) enthalten ist, sicherzustellen.

5. Vorrichtung nach dem vorstehenden Anspruch, wobei der Wärmetauscher (5) einen metallischen Einsatz (3) umfasst, der das Rohr (1) umgibt und dazu konfiguriert ist, eine Wärmekontinuität mit dem Rohr (1) sicherzustellen.

6. Vorrichtung nach einem der vorstehenden Ansprüche, wobei das Profil (7) Verzweigungen (9) umfasst, die sich von der Aufnahme (8) in Richtung des Wärmetauschers (5) erstrecken.

7. Vorrichtung nach einem der vorstehenden Ansprüche, die eine Vielzahl von Wärmetauschern (5) und eine Vielzahl von Profilen (7) umfasst, die in Kontakt mit mindestens zwei Wärmetauschern (5) eingerichtet sind.

8. Vorrichtung nach einem der vorstehenden Ansprüche, wobei der Wärmetauscher (5) und das Profil eine einstückige Einheit bilden, die in den MCP (6), der dazu bestimmt ist, in dem Einschluss (13) enthalten zu sein, taucht.

9. Vorrichtung nach einem der vorstehenden Ansprüche, wobei die thermische Wärmequelle und die elektrische Wärmequelle voneinander beabstandet eingerichtet sind, um eine Wärmeunabhängigkeit sicherzustellen.

10. Vorrichtung nach dem vorstehenden Anspruch kombiniert mit einem der Ansprüche 4 oder 5, wobei die thermische Wärmequelle und die elektrische Wärmequelle voneinander um mindestens drei Mal den Durchmesser des Rohrs (1) beabstandet sind.

11. Vorrichtung nach einem der vorstehenden Ansprüche, wobei der MCP (6) ein flüssiger/fester MCP ist.

12. Verfahren zum Speichern von Energie durch eine Vorrichtung zum Speichern von Wärmeenergie nach einem der vorstehenden Ansprüche, wobei das Verfahren Folgendes umfasst:

a- eine Speicherphase elektrischer Energie, in der die elektrische Wärmequelle Wärme an den MCP (6) überträgt, der die elektrische Energie in Form von Wärmeenergie speichert,
b- eine Speicherphase von Wärmeenergie, in der das Wärmeübertragungsfluid (4) der thermischen Wärmequelle die Wärme an den MCP (6) überträgt, der die thermische Energie speichert,
c- eine Auslagerungsphase von Wärmeenergie, die unterschiedslos von der elektrischen Energie oder der Wärmeenergie stammt, die durch das Wärmeübertragungsfluid (4) in Form von Wärme realisiert wird, wobei das Wärmeübertragungsfluid (4) den MCP (6), der Wärmeenergie abgibt, die von dem Wärmeübertragungsfluid (4) zurückgewonnen wird, kühlt.

13. Verfahren nach dem vorstehenden Anspruch, wobei die Phasen a- und b- gleichzeitig oder abwechselnd erfolgen.

14. Verfahren nach 12 Anspruch, wobei die Phasen a- und c- gleichzeitig erfolgen.

**Claims**

1. Device for storing energy using a phase-change material (PCM) comprising an enclosure (13) intended to contain a phase-change material (6) and a thermal heat source comprising a heat-transfer fluid (4) passing through said enclosure (13) and configured to store and extract heat of and from said PCM (6), the device comprising an electrical heat source placed in the enclosure (13), said heat-transfer fluid (4) passing through said enclosure (13) being intended to collect the thermal energy equally coming from the electrical energy or from the thermal energy, **characterised in that**

- the electrical heat source is configured to only store heat in the PCM (6),
- the thermal heat source comprises an exchanger (5) immersing in the PCM (6) and wherein the heat-transfer fluid (4) circulates,
- the device comprises a profile (7) placed in thermal contact with the PCM (6) and in contact with the exchanger (5) receiving the heat-transfer fluid (4), the profile comprising a housing (8) wherein the electrical heat source is disposed,
- the device comprises fixing means between at least one exchanger (5) and one profile (7).

2. Device according to the preceding claim, wherein the housing (8) of said profile (7) comprises a thermal contact agent ensuring thermal conductivity between the electrical heat source and said profile (7).

3. Device according to any one of the two preceding claims, wherein the electrical heat source is an electrical resistance (10).

4. Device according to any one of the preceding claims, wherein the exchanger (5) comprises a tube (1) comprising peripheral fins (2) shaped to ensure thermal transfers between the PCM (6) and the heat-transfer fluid (4) contained in said tube (1).

5. Device according to the preceding claim, wherein the exchanger (5) comprises a metal insert (3) surrounding said tube (1) and configured to ensure a thermal continuity with said tube (1).

6. Device according to any one of the preceding claims, wherein the profile (7) comprises branches (9) extending from the housing (8) in the direction of the exchanger (5).

7. Device according to any one of the preceding claims, comprising a plurality of exchangers (5) and a plurality of profiles (7) placed at the contacts of at least two exchangers (5).

8. Device according to any one of the preceding claims, wherein the exchanger (5) and the profile (7) forms a one-piece assembly immersing in the PCM (6) intended to be contained in the enclosure (13).

9. Device according to any one of the preceding claims, wherein the thermal heat source and the electrical heat source are placed at a distance from one another to ensure a thermal independence.

10. Device according to the preceding claim, combined with any one of claims 4 or 5, wherein the thermal heat source and the electrical heat source are distant by at least three times the diameter of the tube (1).

11. Device according to any one of the preceding claims, wherein the PCM (6) is a liquid/solid PCM.

12. Method for storing energy by a thermal energy storage device according to any one of the preceding claims, the method comprising:

a- an electric energy storage phase, wherein the electrical heat source transmits heat to the PCM (6) which stores electrical energy in the form of thermal energy,
b- a thermal energy storage phase, wherein the heat-transfer fluid (4) of the thermal heat source transmits said heat to the PCM (6) which stores the thermal energy,
c- a thermal energy clearance phase equally coming from the electrical energy or from the thermal energy achieved by the heat-transfer fluid (4) in the form of heat, wherein the heat-transfer fluid (4) cools the PCM (6) which releases the thermal energy, which is collected by the heat-transfer fluid (4).

13. Method according to the preceding claim, wherein the a- and b- phases are carried out simultaneously or alternatively.

14. Method according to claim 12, wherein the phases a- and c- are carried out simultaneously.

FIG. 1

FIG. 2

FIG. 3

**FIG. 4**

**FIG. 5**

**FIG. 6**

**FIG. 7**

FIG. 8

FIG. 9

FIG. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5687706 A
- DE 202008017601 U1